# EUROPEAN PATENT APPLICATION

(11) **EP 4 807 306 A1**
(43) Date of publication of application: **16.09.2026**
(21) Application number: 26162110.6
(22) Date of filing: 03.03.2026
(51) Int. Cl.: F28F 7/00

(54) **DURABLE BIMETALLIC HEAT EXCHANGER FOR HIGH PERFORMANCE APPLICATIONS**

(30) Priority: 12.03.2025 US 202519077246
(71) Applicant: RTX Corporation, Farmington, CT 06032 (US)
(72) Inventor: Weber, Michael Carl, Niantic, 06357 (US)
(74) Representative: Schmitt-Nilson Schraud Waibel Wohlfrom Patentanwälte Partnerschaft mbB

(57) **Abstract**

A heat exchanger including at least one heat exchanger wall comprising a first side integral with a second side, the first side comprising a first material with a first coefficient of thermal expansion and the second side comprising a second material with a second coefficient of thermal expansion, wherein the first side is configured to grow equally to the second side responsive to a temperature gradient between the first side and the second side; and a thermally constrained feature formed adjacent the at least one heat exchanger wall.

## Description

The present disclosure is directed to the improved heat exchanger with bimetallic walls.

Large thermal gradients across thin heat exchanger features leads to structural issues in components. Many of the heat exchangers that are being implemented have large thermal gradients across increasingly thin tubes (hundreds of degrees Fahrenheit across thicknesses less than 0.020 inch). The existence of large thermal gradients across thin features leads to components that struggle to meet structural requirements such as proof, burst, Low Cycle Fatigue, High Cyle Fatigue, and damage tolerance.

Bimetallic heat exchangers appear to have been explored in some limited capacity for corrosion resistance, but the technology is more limited to coatings.

In accordance with the present disclosure, there is provided a heat exchanger comprising at least one heat exchanger wall comprising a first side integral with a second side, the first side comprising a first material with a first coefficient of thermal expansion and the second side comprising a second material with a second coefficient of thermal expansion, wherein the first side is configured to grow equally to the second side responsive to a temperature gradient between the first side and the second side; and a thermally constrained feature formed adjacent the at least one heat exchanger wall.

Particular embodiments further may include at least one, or a plurality of, the following optional features, alone or in combination with each other:

A further embodiment of any of the foregoing embodiments may additionally and/or alternatively include the thermally constrained feature comprises a portion of the heat exchanger configured inherently stiff which resists mechanical growth responsive to thermal energy transfer and subsequent heating and thermal expansion.

A further embodiment of any of the foregoing embodiments may additionally and/or alternatively include the thermally constrained feature is exposed to thermal gradients across the wall greater than 50 degrees Fahrenheit.

A further embodiment of any of the foregoing embodiments may additionally and/or alternatively include the thermally constrained feature includes stiffness changes to adjacent features greater than 10%.

A further embodiment of any of the foregoing embodiments may additionally and/or alternatively includethe thermally constrained feature comprises at least one of a joint located in heat exchanger tubes fractal from one larger tube to multiple smaller tubes, or where multiple tubes converge into a single tube; a joint between plates of the heat exchanger and an outer wall containing the plates; and an additive manufactured heat exchanger with pin-like fins, a fillet where the pin-like fins join to a layer separating hot and cold side working fluids.

A further embodiment of any of the foregoing embodiments may additionally and/or alternatively include the first side and the second side comprise a different thickness contributing to a total thickness.

A further embodiment of any of the foregoing embodiments may additionally and/or alternatively include a thickness of the first side can be tailored to a local temperature gradient and stiffness changes of the thermally constrained feature.

In accordance with the present disclosure, there is provided a heat exchanger with a bimetallic wall comprising the bimetallic wall comprising a first side integral with a second side, the first side comprising a first material with a first coefficient of thermal expansion and the second side comprising a second material with a second coefficient of thermal expansion, wherein the first side is configured to grow equally to the second side responsive to a temperature gradient between the first side and the second side; and a thermally constrained feature formed adjacent the bimetallic wall, wherein the thermally constrained feature comprises a portion of the heat exchanger configured inherently stiff which resists mechanical growth responsive to thermal energy transfer and subsequent heating and thermal expansion.

Particular embodiments further may include at least one, or a plurality of, the following optional features, alone or in combination with each other:

A further embodiment of any of the foregoing embodiments may additionally and/or alternatively include the first coefficient of thermal expansion and the second coefficient of thermal expansion are differing coefficients of thermal expansion employed to balance a growth between the first side and the second side of the bimetallic wall.

A further embodiment of any of the foregoing embodiments may additionally and/or alternatively include properties of the first material employed in the first side and properties of the second material employed in the second side are configured such that the bimetallic wall grows freely in the absence of stress deformation.

A further embodiment of any of the foregoing embodiments may additionally and/or alternatively include the first material and the second material are configured to compensate for anticipated deformation to prevent the deformation.

A further embodiment of any of the foregoing embodiments may additionally and/or alternatively include the thermally constrained feature is exposed to thermal gradients across the bimetallic wall greater than 50 degrees Fahrenheit.

A further embodiment of any of the foregoing embodiments may additionally and/or alternatively include a wall thickness of at least one of the first side and the second side can be one of a uniform thickness or a variable wall thickness.

In accordance with the present disclosure, there is provided a process of forming a heat exchanger with a bimetallic wall comprising forming the bimetallic wall comprising a first side integral with a second side, the first side comprising a first material with a first coefficient of thermal expansion and the second side comprising a second material with a second coefficient of thermal expansion; configuring the first side to grow equally along with the second side responsive to a temperature gradient between the first side and the second side; and forming a thermally constrained feature adjacent the bimetallic wall; configuring the thermally constrained feature as a portion of the heat exchanger inherently stiff which resists mechanical growth responsive to thermal energy transfer and subsequent heating and thermal expansion.

Particular embodiments further may include at least one, or a plurality of, the following optional features, alone or in combination with each other:

A further embodiment of any of the foregoing embodiments may additionally and/or alternatively include the process further comprising balancing a growth between the first side and the second side of the bimetallic wall by differing the first coefficient of thermal expansion and the second coefficient of thermal expansion.

A further embodiment of any of the foregoing embodiments may additionally and/or alternatively include the process further comprising employing properties of the first material in the first side and employing properties of the second material in the second side; and configuring the bimetallic wall to grow freely in the absence of stress deformation.

A further embodiment of any of the foregoing embodiments may additionally and/or alternatively include the process further comprising tailoring a thickness of the first side to a local temperature gradient and stiffness changes of the thermally constrained feature.

A further embodiment of any of the foregoing embodiments may additionally and/or alternatively include the process further comprising configuring the first material and the second material to compensate for anticipated deformation to prevent the deformation.

A further embodiment of any of the foregoing embodiments may additionally and/or alternatively include the process further comprising exposing the first side to a hot working fluid; exposing the second side to a cold working fluid; and employing properties of the first material of the first side and employing properties of the second material of the second side such that the bimetallic wall grows freely in the absence of stress deformation.

A further embodiment of any of the foregoing embodiments may additionally and/or alternatively include the process further comprising forming the bimetallic wall with features to contour a growth of the heat exchanger; and relieving structural bending across the thermally constrained feature from thermal gradients.

Additive manufacturing techniques such as PBF-LB and DED (wire/powder or cold spray) open up the opportunity to create bimetallic features that help to contour the growth of the component to relieve the structural challenges, with the goal of minimizing or eliminating the bending across the feature net section from thermal gradients. This enables bottoming cycle heat exchangers to capture exhaust heat more effectively while minimizing structural risk, as well as other solutions with system integrated heat exchangers that are capable of unitizing multiple heat exchangers in series or parallel

Other details of the bimetallic heat exchanger wall are set forth in the following detailed description and the accompanying drawings wherein like reference numerals depict like elements.

The above and further advantages of this disclosure may be better understood by referring to the following description in conjunction with the accompanying drawings, in which like reference numerals indicate like elements and features in the various figures. Letters may be appended to reference numbers to distinguish from reference numbers for similar features and to indicate a correspondence to other features in the drawings. For clarity, not every element may be labeled in every figure. The drawings are not necessarily to scale, emphasis instead being placed upon illustrating the principles of the disclosure.
Fig. 1 is a schematic representation of an exemplary heat exchanger.
Fig. 2 is a cross sectional schematic representation of an exemplary heat exchanger wall.
Fig. 3 is a schematic representation of an exemplary heat exchanger wall before thermal growth.
Fig. 4 is a schematic representation of an exemplary heat exchanger wall after thermal growth.
Fig. 5 is a schematic representation of an exemplary heat exchanger wall before thermal growth.
Fig. 6 is a schematic representation of an exemplary heat exchanger wall after thermal growth.

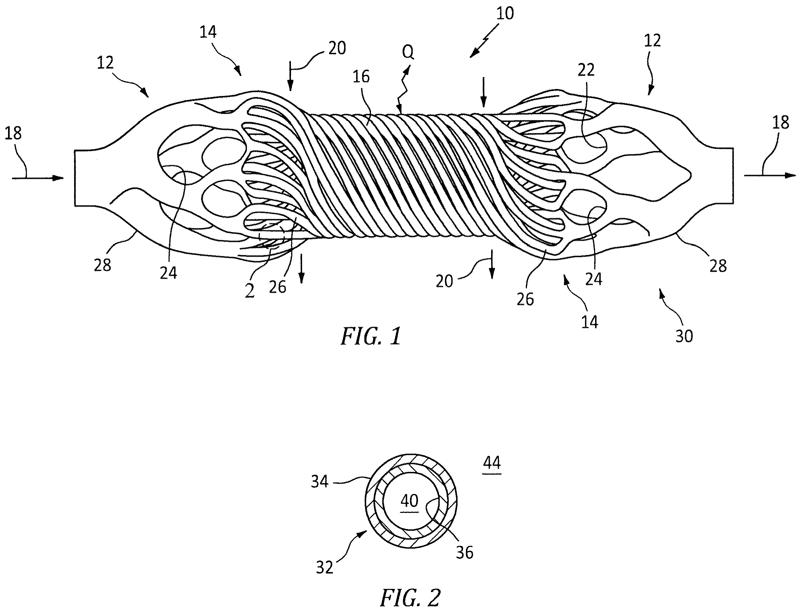

Referring now to Fig. 1 an exemplary heat exchanger 10 is shown. The heat exchanger 10 is shown as a heat exchanger with a header 12 and fractal geometry 14 with multiple flow channels 16. However, it is contemplated that the heat exchanger 10 can be configured as a plate/fin heat exchanger, a tube/shell heat exchanger and other styles of heat exchanger 10 with a first working fluid 18 and a second working fluid 20 exchanging thermal energy Q across the heat exchanger 10. The working fluids 18, 20 can have temperature differentials, temperature gradients (Delta T) that create issues for the flow channels 16 and materials of construction of the heat exchanger 10.

The heat exchanger 10 can include a thermally constrained feature 22. The thermally constrained feature 22 can be understood as a portion of the heat exchanger 10 that is inherently stiff and resists mechanical growth responsive to thermal energy Q transfer and subsequent heating and thermal expansion. The thermally constrained feature 22 can be identified as a feature 22 that in operation sees thermal gradients across the feature 22 greater than 50 degrees Fahrenheit and/or stiffness changes to adjacent features greater than 10%.

An example of a thermally constrained feature 22 can include a joint 24 located in the additive heat exchanger tubes fractal from one larger tube 28 to multiple smaller tubes 26, or on an outlet side 30 where the multiple tubes 26 come back into a single tube 28.

Another example of a thermally constrained feature 22 can include in a plate fin style heat exchanger, a joint between the plates of the heat exchanger and the outer wall containing the plates.

Another example of a thermally constrained feature 22 can include in an additive manufactured heat exchanger with pin-like fins, the fillet where the fins join to the layer separating the hot and cold side working fluids.

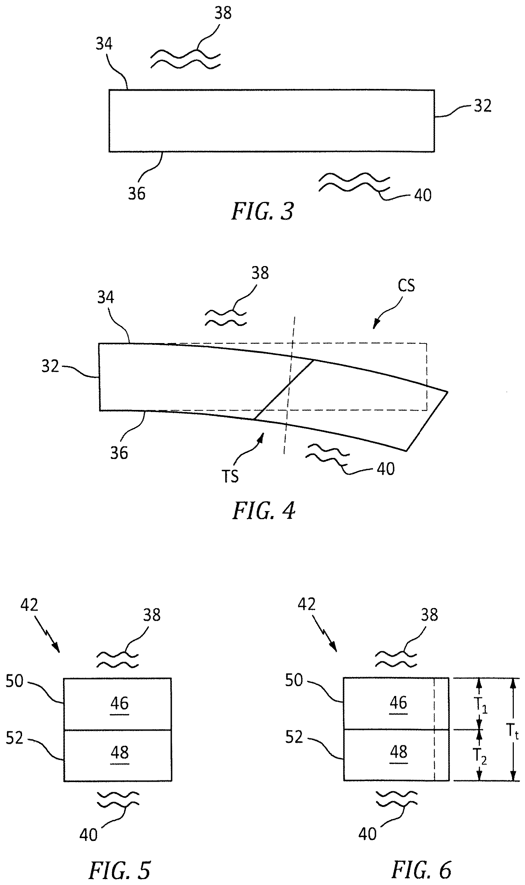

Referring also to Fig. 2, Fig. 3 and Fig. 4, an exemplary single layer heat exchanger wall 32 is shown. The wall 32 can be located proximate a thermally constrained feature 22 of a heat exchanger 10. The wall 32 includes a hot side 34 and opposing cold side 36. The hot side 34 is exposed to a hot working fluid 38. The cold side 36 is exposed to a cold working fluid 40. In an example there can be a temperature differential of 50 degrees between the hot working fluid 38 and the cold working fluid 40. The wall 32 can have a linear coefficient of thermal expansion of for example 0.01. After a period of time, during exposure of the wall 32 to the hot working fluid 38 and cold working fluid 40, the wall 32 is shown deformed, at Fig. 4. The deformation is depicted as the solid lines and the dashed lines as the theoretical non-deformed shape. The hot side 34 experiences compressive stress CS while the cold side 36 experiences tensile stress TS. As a result of the structure of the wall 32, exposure to the temperature gradient and the particular location proximate the thermally constrained feature 22, the wall 32 deforms.

Referring also to Fig. 5 and Fig. 6, a bimetallic heat exchanger wall 42 is shown. The bimetallic heat exchanger wall 42 can be constructed from two different materials. The materials can be tailored to compensate for anticipated deformation to prevent the deformation. The bimetallic heat exchanger wall 42 can be located adjacent the thermally constrained feature 22 of the heat exchanger 10. The bimetallic heat exchanger wall 42 can include a first side 46 integral with a second side 48. The first side 46 can be constructed from a first material 50. The second side 48 can be constructed from a second material 52. In an exemplary embodiment, the first material 50 and second material 52 can be different metals with different linear coefficients of thermal expansion.

In an exemplary embodiment, the first material 50 and second material 52 can have different thickness T₁, T₂ contributing to a total thickness Tₜ. In an exemplary embodiment the second side 48 can be a single material with a thickness T₂ of 0.003 inch to 0.25 inch thick. The first side 46 can be deposited by additive processes with single or variable thickness from 0.000 inch to 0.25 inch thick. It is contemplated that the wall thickness can be uniform, or the wall thickness can vary, such as taper.

The bimetallic heat exchanger wall 42 is shown at Fig. 5 and Fig 6 as being exposed to the hot working fluid 38 on the first side 46 and exposed to the cold working fluid 40 on the second side 48. The properties of the material employed for each of the first side 46 and second side 48 allows the bimetallic heat exchanger wall 42 to grow freely with minimal stress, as shown at Fig. 6. The dashed line is shown to represent an original size with the solid lines showing growth. The growth of the material on the first side 46 exposed to the higher temperature can be offset by a lower linear coefficient of thermal expansion of the material in the first side 46. By tailoring the material composition of the first side 46 and second side 48, differing linear coefficients of thermal expansion can be employed to balance the growth between the first side 46 and the second side 48 of the bimetallic heat exchanger wall 42.

The first material 50 and the second material 52 can be constructed by utilizing additive manufacturing techniques. Additive manufacturing techniques such as powder bed fusion-laser beam (PBF-LB) and directed energy deposition (DED) (wire/powder or cold spray) open up the opportunity to create the bimetallic heat exchanger wall 42 with features that help to contour the growth of the heat exchanger 10 to relieve any structural challenges, with the goal of minimizing or eliminating bending across the thermally constrained feature 22 net section from thermal gradients.

In an exemplary embodiment, a single thickness of the bimetallic heat exchanger wall 42 can be identified across the whole heat exchanger 10 that is applied by an additive process with a material chosen such that the thermal growth of the first side 46 can be matched to the thermal growth of the second side 48.

In another exemplary embodiment, an additive first side 48 can be applied to the second side 52 as a localized application proximate to the thermally constrained feature 22, and the thickness T₁ of the first side 46 can be tailored to the local temperature gradients and stiffness changes for the thermally constrained feature 22.

A technical advantage of the disclosed bimetallic heat exchanger wall includes the capacity to tailor material construction of heat exchanger walls near thermally constrained features to avoid unwanted deformation.

Another technical advantage of the disclosed bimetallic heat exchanger wall includes incorporating additive bimetallic features, to reduce a final weight of the part by minimizing the number of locations that need to be thickened until they meet structural requirements by supporting those locations instead with an appropriate bimetallic feature.

Another technical advantage of the disclosed bimetallic heat exchanger wall includes reducing the overall thickness of more features on the heat exchanger down to the minimum printable feature by tailoring the thicknesses of the two materials over the scope of the heat exchanger using topology optimization tools.

Another technical advantage of the disclosed bimetallic heat exchanger wall includes adding material tactically to reduce thermal gradients, or adding additional material until a feature can structurally handle the higher thermal gradient.

Another technical advantage of the disclosed bimetallic heat exchanger wall includes enabling bottoming cycle heat exchangers to capture exhaust heat more effectively while minimizing structural risk, as well as other solutions with system integrated heat exchangers that are capable of unitizing multiple heat exchangers in series or parallel.

There has been provided a bimetallic heat exchanger wall. While the bimetallic heat exchanger wall has been described in the context of specific embodiments thereof, other unforeseen alternatives, modifications, and variations may become apparent to those skilled in the art having read the foregoing description. Accordingly, it is intended to embrace those alternatives, modifications, and variations which fall within the broad scope of the appended claims.

## Claims

1. A heat exchanger comprising:
at least one heat exchanger wall comprising a first side integral with a second side, the first side comprising a first material with a first coefficient of thermal expansion and the second side comprising a second material with a second coefficient of thermal expansion, wherein the first side is configured to grow equally to the second side responsive to a temperature gradient between the first side and the second side; and
a thermally constrained feature formed adjacent the at least one heat exchanger wall.

2. The heat exchanger according to claim 1, wherein the thermally constrained feature comprises a portion of the heat exchanger configured inherently stiff which resists mechanical growth responsive to thermal energy transfer and subsequent heating and thermal expansion; and/or
wherein the thermally constrained feature is exposed to thermal gradients across the wall greater than 50 degrees Fahrenheit; and/or
wherein the thermally constrained feature includes stiffness changes to adjacent features greater than 10%.

3. The heat exchanger according to claim 1 or 2, wherein the thermally constrained feature comprises at least one of a joint located in heat exchanger tubes fractal from one larger tube to multiple smaller tubes, or where multiple tubes converge into a single tube; a joint between plates of the heat exchanger and an outer wall containing the plates; and an additive manufactured heat exchanger with pin-like fins, a fillet where the pin-like fins join to a layer separating hot and cold side working fluids.

4. The heat exchanger according to any of claims 1 to 3, wherein the first side and the second side comprise a different thickness contributing to a total thickness; and/or
wherein a thickness of the first side can be tailored to a local temperature gradient and stiffness changes of the thermally constrained feature.

5. The heat exchanger according to any of claims 1 to 4, wherein the at least one heat exchanger wall is a bimetallic wall.

6. The heat exchanger according to any of claims 1 to 5, wherein the first coefficient of thermal expansion and the second coefficient of thermal expansion are differing coefficients of thermal expansion employed to balance a growth between the first side and the second side of the at least one heat exchanger wall.

7. The heat exchanger according to any of claims 1 to 6, wherein properties of the first material employed in the first side and properties of the second material employed in the second side are configured such that the at least one heat exchanger wall grows freely in the absence of stress deformation.

8. The heat exchanger according to any of claims 1 to 7, wherein the first material and the second material are configured to compensate for anticipated deformation to prevent the deformation.

9. The heat exchanger according to any of claims 1 to 8, wherein a wall thickness of at least one of the first side and the second side can be one of a uniform thickness or a variable wall thickness.

10. A process of forming a heat exchanger with a bimetallic wall comprising:
forming the bimetallic wall comprising a first side integral with a second side, the first side comprising a first material with a first coefficient of thermal expansion and the second side comprising a second material with a second coefficient of thermal expansion;
configuring the first side to grow equally along with the second side responsive to a temperature gradient between the first side and the second side; and
forming a thermally constrained feature adjacent the bimetallic wall;
configuring the thermally constrained feature as a portion of the heat exchanger inherently stiff which resists mechanical growth responsive to thermal energy transfer and subsequent heating and thermal expansion.

11. The process according to claim 10, further comprising:
balancing a growth between the first side and the second side of the bimetallic wall by differing the first coefficient of thermal expansion and the second coefficient of thermal expansion.

12. The process according to claim 10 or 11, further comprising:
employing properties of the first material in the first side and employing properties of the second material in the second side; and
configuring the bimetallic wall to grow freely in the absence of stress deformation.

13. The process according to any of claims 10 to 12, further comprising:
tailoring a thickness of the first side to a local temperature gradient and stiffness changes of the thermally constrained feature; and/or
further comprising:
configuring the first material and the second material to compensate for anticipated deformation to prevent the deformation.

14. The process according to any of claims 10 to 13, further comprising:
exposing the first side to a hot working fluid;
exposing the second side to a cold working fluid; and
employing properties of the first material of the first side and employing properties of the second material of the second side such that the bimetallic wall grows freely in the absence of stress deformation.

15. The process according to any of claims 10 to 14, further comprising:
forming the bimetallic wall with features to contour a growth of the heat exchanger; and
relieving structural bending across the thermally constrained feature from thermal gradients.
